# EUROPÄISCHE PATENTSCHRIFT

(11) **EP 1 506 984 B1**
(45) Veröffentlichungstag und Bekanntmachung des Hinweises auf die Patenterteilung: **11.10.2006**
(21) Anmeldenummer: 04017156.3
(22) Anmeldetag: 21.07.2004
(51) Int. Cl.: C09J 7/02

(54) **Biaxial verstreckte, doppelseitig klebend ausgerüstete Klebebänder und Verfahren zu deren Herstellung**
Biaxially oriented, double-sided adhesive tapes and method for their preparation
Rubans adhésifs double face à orientation biaxiale et procédé pour leur préparation

(30) Priorität: 13.08.2003 DE 10337371
(43) Veröffentlichungstag der Anmeldung: 16.02.2005
(73) Patentinhaber: tesa AG, 20253 Hamburg (DE)
(72) Erfinder: Müssig, Bernhard, 21218 Seevetal (DE)
(74) Vertreter: Stubbe, Andreas

(56) Entgegenhaltungen:
- EP-A- 1 302 521
- EP-A- 1 321 268
- US-A1- 2002 157 767

## Beschreibung

Die Erfindung betrifft ein Verfahren zur Herstellung eines doppelseitigen Folienklebebandes sowie ein entsprechend hergestelltes Klebeband.

Üblicherweise werden für doppelseitige Klebebänder aus biaxial verstreckten Folien als Rohstoff Polypropylen oder Polyester eingesetzt. Aus Kostengründen haben isotaktisches Polypropylen und seine Copolymere mit Ethylen die größere Bedeutung. Bei höheren Anforderungen, zum Beispiel an die Temperaturbeständigkeit, werden bevorzugt Polyesterfolien eingesetzt. Die Verstreckung hat eine wesentliche Funktion, dadurch sind die Klebebänder besser in der Festigkeit, der Transparenz und der Verarbeitbarkeit bei ihrer Herstellung als auch bei der Applikation durch den Endverbraucher. Solche Folien werden in einem separaten Arbeitsgang mit dem Haftklebstoff beschichtet, dabei werden meistens noch weitere Funktionsschichten zusätzlich aufgebracht. Die wichtigsten Anwendungen sind die Kaschierung von Profilen in schmaler Breite oder als bahnförmiges Material in Form von Dekorplatten in großer Breite, das Endloskleben von Folien- oder Papierbahnen sowie die Fixierung von Gegenständen wie Haken an Wänden oder in Form von Stanzlingen zum Zusammenbau von elektronischen Geräten wie Mobiltelefonen.

Zum Stand der Technik zur Herstellung von doppelseitigen Klebebändern aus biaxial verstreckten Folienträgern gehören die im folgenden dargelegten Verfahrensschritte.
- Herstellung einer biaxial verstreckten Folie
- Ausrüstung mit Funktionsschicht auf der ersten Seite
- Beschichtung mit Haftklebstoff auf der ersten Seite
- Kaschierung mit Liner (Trennfolie oder Trennpapier)
- Ausrüstung mit Funktionsschicht auf der zweiten Seite
- Beschichtung mit Haftklebstoff auf der zweiten Seite
- gegebenenfalls Dekaschierung eines Liners
- Wicklung und
- Konfektionierung.

### • Herstellung einer biaxial verstreckten Folie

Bei Polypropylen kommen praktisch ausnahmslos Folien aus dem Zwei-Stufen-Prozess (Reckung zuerst längs und dann quer) zum Einsatz, obwohl die Festigkeit in Längsrichtung höher ist als in Quererrichtung. Anlagen für einen derartigen Prozess werden zum Beispiel von den Firmen Brückner (D) oder Mitsubishi (J) hergestellt. Diese Anlagen erlauben die Extrusion einer Polypropylenschmelze auf eine gekühlte Walze (Chill-Roll), eine Verstreckung in MD im Verhältnis von ca. 1 : 5 und eine Verstreckung in CD im Verhältnis von ca. 1 : 10.
Die Folie wird vom Klebebandhersteller selbst gefertigt oder von einem Folienhersteller bezogen.
Der Zwei-Stufen-Prozess ist auch in umgekehrter Reihenfolge möglich, wobei bessere mechanische Eigenschaften in MD erreicht werden, jedoch ist der Prozess weder wirtschaftlich noch in großer Breite betriebssicher, da die Verstreckung in MD in voller Breite durchgeführt werden muss; diese Variante wird daher praktisch nicht genutzt. Eine Drei-Stufen-Verstreckung (Verstreckung in MD-CD-MD) liefert ebenfalls eine verbesserte Festigkeit in MD gegenüber dem üblichen Zwei-Stufen-Verfahren, ist aber verfahrenstechnisch aufwendig und hat daher zum Teil nur geringe Bedeutung.
Geblasene Folien aus Ringdüsen sind von geringer Bedeutung. Dieser Prozess der Folienherstellung ist aufgrund der üblichen geringen Anlagengröße weniger effizient als der Zwei-Stufen-Prozess.

Simultan mit Reckrahmen gereckte (das heißt, die extrudierte Primärfolie wird in CD und MD gleichzeitig verstreckt) Polypropylenfolie hat bisher keine praktische Bedeutung für die Anwendung als Trägerfolie für Klebebänder erlangt, da die Anlagetechnik relativ hohe laufende Kosten für die Folie bewirkt und die Investitionskosten gegenüber anderen Verfahren erheblich höher liegen. Das gilt für die Technik der Firma Kampf mit fest vorgegebenen Dimensionen des Reckrahmens (daher einem kaum veränderbaren Reckverhältnis) und für die neuere Linearmotorentechnik mit variablen Reckverhältnissen von Firma Brückner. Letztere wird für spezielle Polyesterfolien angewandt, die wiederum für Klebebänder keine Marktbedeutung haben, wobei eine Verwendung in diesen nicht ausgeschlossen ist.

Die Herstellung von biaxial verstreckten Polyesterfolien, zum Beispiel aus Polyethylenphthalat oder Polyethylennaphalat, erfolgt in analoger Weise zu den ausführlich beschriebenen Polypropylenfolien jedoch mit geringeren Reckverhältnissen und bei höherer Temperatur.

Für doppelseitige Folienklebebänder werden auch Hart-PVC-Folien mit Mono- oder biaxialer Verstreckung eingesetzt. Die größte Bedeutung als Zwischenträger bei doppelseitigen Klebebändern haben jedoch dünne Vliese und Papiere (sogenannte Tissues) mit einem Flächengewicht von unter 30 g/m².

### • Nichthaftklebrige Funktionsschichten

In der Regel werden vor der Klebstoffbeschichtung weitere Funktionsschichten aufgebracht, wie zum Beispiel Metallisierung mit Aluminium, Beschichtung von Primer oder Coronabehandlung zur Verbesserung der Haftung des Klebstoffs auf der Folie. Als Beispiel für eine weitere Funktionsschicht sei eine Bedruckung genannt.

### • Beschichtung mit Haftklebstoff

Die Folie wird nach verschiedenen Verfahren mit Klebstoff beschichtet. Von praktischer Bedeutung sind Schmelzhaftkleber auf der Basis von SIS-Blockcopolymeren und Kohlenwasserstoffharzen, Lösungsmittelhaftkleber auf Basis von Naturkautschuk, Kohlenwasserstoffharzen, vor allem Lösungsmittelhaftkleber auf Basis von Acrylat und wässrige Acrylatdispersionen. Nach dem Beschichtungsvorgang (einschließlich einer eventuellen notwendigen Trocknung) wird die Kleberschicht, zumindest die erste, mit Trennpapier oder Trennfolie kaschiert. Die Kleber werden häufig nicht direkt auf die Folie aufgetragen, sondern auf Trennpapier oder Trennfolien ausgestrichen und durch Kaschierung auf die Folie übertragen.

### • Konfektionierung

Die beidseitig mit Klebstoff beschichteten Folien werden zu großen Rollen (sogenannten Jumbos) gewickelt und in einem weiteren Arbeitsschritt zu Klebebandrollen geschnitten und anschließend verpackt. Falls beide Klebstoffschichten mit Trennpapier oder -folie abgedeckt werden, wird bei der Konfektionierung eine davon in der Regel auskaschiert.

Die US 5,145,718 A beschreibt einen neuen Prozess zur Verbesserung der Wirtschaftlichkeit der Fertigung einseitig beschichteter Klebebänder. Der wesentliche Gedanke besteht in der Integration der Beschichtung von Haftkleber und Release in den Prozess der Folienherstellung im bekannten Zwei-Stufen-Prozess, wobei die Beschichtung der Folien zwischen den Schritten der Längs- und Querverstreckung erfolgt. Der Klebstoff wird nicht biaxial verstreckt. Je stärker die Verstreckung ist, desto dickere Schichten vor der Verstreckung können zu der richtigen Enddicke der Klebstoffschicht führen. Je höher die Ausgangsschicht ist, desto hochviskosere (damit für den Endverbraucher leistungsfähigere) Klebstoffe können eingesetzt werden. Das Verfahren ist für doppelseitige Klebebänder nicht anwendbar.

Die vorliegende Erfindung grenzt sich gegen die WO 96/37568 A1 dadurch ab, dass die dort genannten Folien vorzugsweise unverstreckt sind, Streckverhältnisse über 1 : 1.2 in MD und CD werden sogar als nachteilig beschrieben. Weiterhin handelt es sich bei den in dieser Schrift genannten Produkten um Oberflächerischutzprodukte, bei denen eine schwach klebende Masse vorrangig durch Extrusionsbeschichtung einseitig aufgebracht wurde.

Aus der DE 101 32 534 A1 ist ein Verfahren zur Herstellung eines Folienklebebandes bekannt, das einen Verbund aus mindestens einer extrudierten Trägerfolienschicht und einer Haftkleberschicht auf einer der Seiten der Trägerfolienschicht zeigt, wobei der Verbund biaxial verstreckt wird.
Die Kleberbeschichtung ist wiederum einseitig aufgebracht.

Aufgabe der Erfindung ist es, Verfahren zur Verstreckung von doppelseitig klebend ausgerüsteten Klebebändern zur Verfügung zu stellen, welche die Nachteile des Standes der Technik nicht aufweisen, welche insbesondere bei einfacher und kostengünstiger Arbeitsweise ein hochwertiges doppelseitiges Klebeband zur Verfügung stellen.

Die Aufgabe wird überraschend durch Verfahren gelöst, welche in den Ansprüchen dargestellt sind. Die Unteransprüche betreffen Weiterentwicklungen dieses Verfahrens.

Demgemäß betrifft die Erfindung entsprechend ein Verfahren zur Herstellung eines doppelseitig klebend ausgerüsteten Folienklebebandes, wobei ein Verbund aus mindestens einer Trägerfolienschicht, auf der beidseitig eine Haftkleberschicht vorhanden ist, biaxial verstreckt wird.

Weiterhin betrifft die Erfindung ein Verfahren zur Herstellung eines doppelseitig klebend ausgerüsteten Folienklebebandes, wobei ein Verbund aus mindestens einer Trägerfolienschicht, auf der einseitig eine Haftkleberschicht vorhanden ist, biaxial verstreckt wird, und anschließend auf den verstreckten Verbund eine zweite Haftkleberschicht aufgebracht wird.

Vorzugsweise werden beide Haftkleberschichten gleichzeitig mit der Folie verstreckt.

Jede Haftkleberschicht kann hierbei homogen aus einer Haflklebemasse oder auch aus mehreren Schichtabfolgen von Haftklebern verschiedener Zusammensetzung bestehen.

Die beiden Haftkleberschichten können gleiche oder unterschiedliche Zusammensetzung oder Dicke aufweisen.

Das Verfahren der simultanen Verstreckung von Folienträgerschicht und Haftkleberschicht(en) ermöglicht die Herstellung von Folienklebebändem mit überragenden mechanischen Eigenschaften in Längsrichtung und günstigen Kosten durch die Integration von Folienherstellung und Beschichtung und gegebenenfalls zusätzlich Kaschierung, Wicklung von Rollen oder Stangen in einen In-Line-Prozess. Alle biaxialen Verstreckungsprozesse sind prinzipiell geeignet.

In der Literatur werden das Blasverfahren (zum Beispiel double bubble), der Kampf-Prozess (nicht regelbare Reckung) und insbesondere der LISIM-Prozess (Linearmotorverstreckung) beschrieben, zum Beispiel J. Nentwig, Papier+Kunststoffverarbeiter, Seite 22, Heft 12 (1998), Modern Plastics, Seite 26, Märzheft (1996), Kunststoffe 85, Seite 1314 (1995), DE 37 44 854 A1, DE 39 28 454 A1.

Im Prinzip ist auch eine Anwendung auf Kalanderfolien möglich, zum Beispiel durch Transferierung von Klebstoff auf eine Hart-PVC-Folie nach dem Kalander, aber vor der Verstreckung (KOBRA-Prozess). Die vorliegende Erfindung hat das Ziel, die Wirtschaftlichkeit und daneben auch die Qualität von Klebebändern mit biaxial verstreckter Folie, insbesondere Polyester- und Polypropylenfolie, zu verbessern.

Durch Wegfall der Herstellung von Folien als Zwischenprodukt in Rollenform werden die Bearbeitungskosten gesenkt und Abfälle (Folienreste bei automatischem Rollenwechsel an der Beschichtungsanlage) vermeiden. Als wesentliches Kennzeichen des erfindungsgemäßen Verfahrens werden Haftkleber und Folienträgerschicht (Folienrohstoff) simultan in einem Schritt biaxial verstreckt (gereckt).

Die Herstellung der Primärfolie (gegebenenfalls zusammen mit Funktionsschichten) erfolgt vorzugsweise im Cast-Prozess mit Extruder und Chill-Roll, die Aufbringung von Haftkleber findet vor dem simultanen Verstrecken in einem geheizten Reckrahmen auf der Folie (das heißt auf der Trägerfolienschicht oder auf der Primerschicht) statt. Wird der Haftkleber vermittels eines Liners als Hilfsträgers übertragen, so muss dieser vor der Verstreckung auskaschiert werden. Eine andere Ausführungsform vermeidet Beschichtung durch Coextrusion von Folienträgerschicht und Haftkleberschicht sowie optionaler Funktionsschichten.
In der bevorzugten Form des Verstreckens werden die Kluppen gleichzeitig in CD (quer) gezogen und der Kluppenabstand in MD (längs) kontinuierlich vergrößert, wodurch die Folie simultan quer und längs verstreckt wird. Diese mechanischen Vorgänge können fest installiert (Kampf-Technologie) oder variabel angelegt sein, zum Beispiel durch geeignete Antriebe (Brückner-Technologie) oder bei Blasverfahren zum Beispiel durch Abzugsgeschwindigkeit und Aufblasverhältnis. Variable Orientierung ist von außerordentlichem Vorteil, da die Produktionsbreite und die mechanischen Eigenschaften der resultierenden Folie auf jede Anwendung flexibel angepasst werden können. Die durch das Simultanreckverfahren resultierenden ca. 50 % höheren Festigkeiten der Folie beziehungsweise des Klebebandes gegenüber solchen Produkten aus dem Zwei-Stufen-Prozess können sowohl zur Verbesserung der Produktqualität als auch als auch zur Reduzierung der Foliendicke genutzt werden.

Beim Zwei-Stufen-Verfahren ist die Festigkeit in Querrichtung (CD) immer höher als in Längsrichtung (MD), was aus den Reckverhältnissen resultiert und der Tatsache, dass der Memory-Effekt des letzten Verfahrenschrittes (Querverstreckung) am stärksten ausgeprägt ist. Ein wesentlicher Vorteil des erfinderischen Verfahrens ist die Möglichkeit einer hinreichend starke Verstreckung des Klebebandes in Laufrichtung (MD). Das Gesamtstreckverhältnis (Multiplikation aus Streckverhältnis mit MD und Streckverhältnis CD) sollte bei Polypropylen mindestens 1 : 25 betragen, vorzugsweise mindestens 1 : 40, also zum Beispiel 1 : 50. Das Verhältnis des Streckverhältnisses in Längsrichtung zu dem in Querrichtung sollte über 0,6, vorzugsweise über 0,9 und besonders bevorzugt über 1,2 liegen. Dabei ergeben sich Spannungswerte bei 10 % Dehnung nach DIN 53457 in MD von mindestens 50, vorzugsweise mindestens 70 und besonders bevorzugt mindestens 100 N/mm². Die Tensile Strength (Zugfestigkeit) nach DIN 53455-7-5 in Längsrichtung liegt bei mindestens 160, vorzugsweise bei mindestens 190 und besonders bevorzugt bei mindestens 220 N/mm². Bei Polyesterfolie betragen in Reckverhältnisse in CD und MD vorzugsweise 1 : 3,2 bis 1 : 3,5 beziehungsweise das Gesamtreckverhältnis vorzugsweise von 1 : 10 bis 1 : 14, wobei bevorzugt die Reckverhältnisse in CD und MD vergleichbar sind (balanced film) oder in MD höher als in CD ist (tensilized film).

Die Dicke der Folienschicht liegt vorzugsweise zwischen 10 und 40 µm, da hohe Foliendicken zu hohe Kräfte beim Verstrecken benötigen und das Klebeband für die Anwendung zu steif wird und bei zu niedrigen Dicken das Klebeband zu leicht dehnbar (weich) ist, was bei Zugbelastung zum Ablösen der Klebverbindung führen kann.

Die vorliegende Erfindung erreicht eine Verbesserung der Produktivität durch Integration von Folienherstellung und Klebstoffaufbringung, wie es bei der US 5,145,718 A offenbart ist. Weiterhin wird anstelle der Beschichtung der monoaxial verstreckten Folie mit Haftkleber und Release die Coextrusion eines mehrlagigen Vorproduktes aus Träger (Folie) und Haftkleber möglich, wodurch sich der Prozess noch weiter vereinfacht. Sie ermöglicht leistet jedoch wesentlich mehr, zum Beispiel die Herstellbarkeit von doppelseitigen Klebebändern, dies ist nach dem Verfahren der genannten Schrift nicht möglich, da sich selbst ein einseitig klebendes Produkt nicht auf Reckwalzen verstrecken lässt, wohingegen das erfindungsgemäße Verfahren eine kontaktlose Verstreckung einer oder zweier Haftklebstoffschichten ermöglicht. Ein weiterer Vorteil der vorliegenden Erfindung ist die biaxiale, insbesondere simultane Verstreckung. Diese ermöglicht nicht nur höhere Festigkeiten in Längsrichtung sondern auch die Verwendung viskoserer höherwertiger Haftkleber als jene auf Basis von Styrolblockcopolymeren, wie sie in der US 5,145,718 A gezeigt werden.

Wie dem Fachmann geläufig, werden hochwertige doppelseitige Klebebänder aus Naturkautschuk- und Acrylatschmelzhaftklebern hergestellt. Solche Haftkleber werden durch die Schrift nicht abdeckt. Naturkautschukschmelzhaftkleber sind extrem hochviskos, so dass sie bisher nicht in dünnen Schichten herstellbar sind. Das neue Verfahren weist gegenüber der oben genannten Schrift den Vorteil auf, dass man durch die biaxiale Verstreckung (Gesamtstreckverhältnis bei Polypropylen ca. 1 : 50 beziehungsweise bei Polyester ca. 1 : 13) eines solchen Klebstoffs leicht zu einer viel dünneren Schicht gelangt als nur durch Querverstreckung (Streckverhältnis ca. 1 : 8 beziehungsweise 1 : 3,6), weshalb der Haftklebstoff vor der Beschichtung in entsprechend höher Schichtdicke mit der unverstreckten Folienschicht zusammengeführt werden kann. Das vorliegende Verfahren eröffnet auch die Möglichkeit, die Klebebandbahn anstelle einer Aufwicklung zu einem Jumbo" mit nachfolgendem Schneidprozess nach Durchlaufen einer optionalen Kaschier-/Dekaschierstation und eines Speichers unmittelbar einer Aufwicklung in Endverbraucherlänge zuzuführen, also entweder einem Stangenwickler oder einer Schneidmaschine. Ein ganz wesentlicher Unterschied zu der US 5,145,718 A und zu konventionellen Klebebändern mit biaxial verstreckter Folie besteht in der Qualität, insbesondere den verbesserten technischen Eigenschaften des Klebebandes und der darin enthaltenen Folienschicht. Klebebänder mit Folien aus dem üblichen Zwei-Stufen-Prozess weisen in MD (Maschinenrichtung, Laufrichtung) relativ schwache mechanische Eigenschaften wie Zugfestigkeit (Reißkraft), 10 %-Modul (als Maß für den Widerstand gegen Verdehnung bei Abrollen oder Applizieren) und Bruchdehnung auf, wohingegen diese Werte in Querrichtung ohne Anwendungsvorteil immer erheblich besser sind.
Werden Klebebänder aus solchen Folien auf Applikatoren durch Zug beansprucht, werden diese Produkte leicht überdehnt, was nachfolgend zu Ablösung des Klebebandes vom verklebten Untergrund führen kann. Diese Problematik gilt jedoch nicht für die erfindungsgemäß hergestellten Produkte mit überlegener Performance in Längsrichtung. Vorteilhaft ist die Trägerschicht so gereckt, dass die Spannung bei 10 % Dehnung in Längsrichtung mindestens 50 N/mm², bevorzugt mindestens 70 N/mm², sehr bevorzugt mindestens 100 N/mm² beträgt. Weiterhin vorteilhaft ist die Trägerschicht so gereckt ist, dass die Tensile Strength in Längsrichtung mindestens 160 N/mm², bevorzugt mindestens 190 N/mm², sehr bevorzugt mindestens 220 N/mm² beträgt.

Im folgenden sind einige besonders vorteilhafte Ausführungsformen des erfinderischen Verfahrens beschrieben.

Eine Ausführung ist die Integration der Kaschierung mit Trennfolie- oder Trennpapier und des Schneidens von Mutterrollen, Stangenware oder Rollen in Verkaufsabmessung in das erfindungsgemäße Verfahren. Hierdurch kann die Produktivität weiter gesteigert werden. Hierzu können zum Beispiel Schneidmaschinen mit sehr schnellem automatischem Rollenwechsel eingesetzt werden, bevorzugt wird der Einbau eines Produktspeichers für das An- und Abfahrens des Schneidautomaten eingebaut. Die Ausführung als Stangenware bietet eine Möglichkeit, ein breites Sortiment an Abmessungen leichter zu handhaben.

Eine weitere Besonderheit der vorliegenden Erfindung ist die Möglichkeit der Vernetzung des Haftklebers im erfindungsgemäßen Verfahren, welche vorzugsweise nach der Verstreckung durchgeführt wird. Möglichkeiten sind die Strahlenvemetzung mit UV-, Gamma- oder Elektronenstrahlen oder die chemische Vernetzung. Letztere ist möglich durch kontinuierliche Zudosierung von Vernetzern wie Epoxiden, Isocyanaten, Aziridinen etc. in den Klebstoff oder in eine Primerschicht, durch Coextrusion oder Beschichtung mit einer solche Vernetzer enthaltenden Masse, wobei die Vernetzer in der Primerschicht erst nach Diffusion in den Kleber aktiv werden.

Bei Bedarf kann vor dem Aufbringen der Haftkleberschicht eine Primerschicht, insbesondere lösungsmittelfrei wie zum Beispiel durch Coextrusion, aufgebracht werden, so dass sich zwischen einer Trägerfolienschicht und einer Haftkleberschicht eine Primerschicht befindet.

Vorteilhaft ist eine physikalische Vorbehandlung der Trägerfolienschicht zur Verbesserung der Haftung durch Flamm-, Plasma- oder Coronabehandlung, soweit die Klebstoffschicht nicht durch Coextrusion aufgebracht wurde.

In einer der Ausführungsformen des erfinderischen Verfahrens wird der Haftkleber vor der biaxialen Verstreckung durch Kaschieren aufgebracht, als Übertragungsmedium können Trennpapier- oder Trennfolie oder ein Gurtband aus Silikon oder Fluorpolymer eingesetzt werden. Die Aufbringung des Haftklebers auf das Übertragungsmedium erfolgt in den für Klebebänder üblich Beschichtungsverfahren, insbesondere lösungsmittelfrei. Vor der Verstreckung sollten Trennpapier- beziehungsweise Trennfolie auskaschiert werden. Vor dem Aufwickeln des doppelseitigen Klebebandes muss wieder ein Trennpapier- oder eine Trennfolie einkaschiert werden. Hiervon ausgenommen sind stark vernetzte Kleber, welche eine nur mäßige Haftung auf gleichartigen oder anderen vernetzten Häftklebern aufweisen.

Eine weitere Ausführungsform ist die Beschichtung des Klebstoffs aus der Schmelze durch geeignete Auftragswerke wie Düsen oder Walzen.

Die Erfindung schließt die Verwendung von Lösungsmitteln nicht aus, in bevorzugten Ausführungsformen ist das Verfahren jedoch völlig lösungsmittelfrei, besonders bevorzugt ist eine Verarbeitung aller Komponenten aus dem Schmelze, beispielsweise die Herstellung aller Schichten des Verbundes aus der Schmelze.

Die bevorzugte Ausführungsform für das Aufbringen des Klebers auf die Trägerfolienschicht ist die Coextrusion. Hierfür sind Düsen mit Feedblock geeignet, bei schwierigen Viskositätsverhältnissen wird eine Multimanifold-Die bevorzugt.

Es hat sich als vorteilhaft erwiesen, Maßnahmen gegen den Nachschrumpf des Klebebandes durch Nachkristallisation der Folienschicht zu ergreifen, welcher zum Teleskopieren der Rollen oder Verformung des Pappkerns führen kann. Dies sind Thermofixierung des Verbundes (Temperung des Klebebandes unterhalb der Kristallitschmelztemperatur des Rohstoffs der Folienschicht), Verwendung von Nukleierungsmittel, Zwischenlagerung von Jumbos vor dem Schneiden oder die Verwendung von Pappkernen mit elastischer Schaumauflage.

Die Rohstoffe für die Folie können Polyester (zum Beispiel PET, PEN oder Copolymer), Polyamide (zum Beispiel PA 6, PA 66, PA 46), Polystyrol (kristallin mit syndiotaktischer Struktur oder ataktisch amorph), Polyvinylchlorid oder andere verstreckbare Polymere sein. Wegen der günstigen Kosten und hohen Festigkeiten werden vorrangig Polyolefine eingesetzt werden, zum Beispiel Polyethylen und Polypropylen sowie deren Copolymere. Diese können verschiedene Strukturen aufweisen, zum Beispiel Random, Minirandom, Block, Pfropfung oder Homopolymere mit eingeschlossenen amorphen Phasen. Bevorzugt ist teilkristallines Polypropylen mit überwiegend isotaktischer Struktur ohne oder mit nur geringem Comonomeranteil, insbesondere mit einem Schmelzindex von 1 bis 10 g/10 min (gemessen bei 230 °C und 21,6 N). Solche Polypropylene sind in Encycl. Polym. Sci. Technol. 13 (1988) und in Ullmann's Encyclopedia of Industrial Chemistry A21 (1992) beschrieben.

Diese Rohstoffe können jeweils allein oder in Abmischung eingesetzt werden, wobei die dem Fachmann geläufigen Additive wie zum Beispiel Pigmente, Füllstoffe, Antistatika, Antioxidantiken, Lichtschutzmittel etc. mitverwendet werden können. Derartige Stoffe sind im Plastics Additives Handbook, 5^{th} edition, Hanser Publishers, München beschrieben. Für diese Anwendung ist der Zusatz von Nucleierungmittel empfehlenswert, um den Nachschrumpf des Klebebandes zu reduzieren.

Als Funktionsschicht/Primer sind die bekannten Dispersion- und Lösungsmittelsysteme verwendbar. Im Fall der Coextrusion einer solchen Schicht bieten sich zum Beispiel MSAgepfropfte Polyolefine, lonomere, Copolymere des Styrols mit Butadien oder Isopren, amorphe Polyester, chlorierte Polyolefine, Polypropylenblockcopolymere mit sehr hohem amorphen Anteil oder Mischungen aus PP mit anderen Copolymeren. Bei Polyester wie PET können chemische Primer - wie zum Beispiel in EP 0 266 677 A1 - beschrieben oder coextrudierte Copolyester mit geringer Kristallinität eingesetzt werden.

Die Haftkleberschicht kann dabei aus einer einzigen Haftklebemasse oder auch aus mehreren Einzelschichten bestehen, wobei eine derartige Schichtabfolge auch aus unterschiedlichen Klebemasse zusammengesetzt sein kann.

Bei den Haftklebern kommen alle gängigen Typen in Frage, zum Beispiel die in US 5,145,718 A beschriebenen, einschließlich der genannten Additive. Bevorzugt werden Haftschmelzkleber eingesetzt, die durch Coextrusion, Extrusions- oder Kalander-Beschichtungen aufgebracht werden. In Frage kommen vor allem Kleber auf Basis von Kautschuk. Solche Kautschuke können zum Beispiel Homo- oder Copolymere des Isobutylens, des 1-Butens, des Vinylacetats, von Acrylsäureestern, des Butadiens oder des Isoprens sein. Besonderes Interesse haben Rezepturen auf Basis von Acrylsäureestern, Butadien oder Isopren. Hervorzuheben sind sowohl Mischungen aus Naturkautschuk und Harz(en) sowie schmelzbare Polyacrylsäureester mit Blockstruktur zur physikalischen Vernetzung. Da die Beschichtung oder Coextrusion der Klebemassen wegen der hohen Reckverhältnisse bis zu 50fachen Dicke des Masseauftrages des Endproduktes erfolgen kann, lassen sich selbst sehr hochviskose Massen einsetzen. Dadurch lassen sich insbesondere hochviskose Naturkautschukmassen, die in ca. 20 µm Masseauftrag nicht und selbst bei 100 µm praktisch nur schwer umsetzten lassen, relativ leicht bei ca. 1 mm Masseauftrag realisieren.

Für die unterschiedlichen Ausführungsformen des erfinderischen Verfahrens, insbesondere in Hinblick auf die unterschiedlichen Beschichtungsweisen, muss die Verstreckbarkeit des Haftklebers durch Wahl einer geeigneten Rezeptur und/oder Temperaturführung optimiert werden, das bedeutet, dass zum Beispiel bei Naturkautschuk kein zu hoher Mooney-Wert vorliegen sollte. Es werden, insbesondere im Fall der Coextrusion, Haftkleber aus Harzen und einer Mischung von Natur- und Styrol-Isopren-Blockcopolymerkautschuk bevorzugt, weil sich die Viskosität der Klebstoffschicht über die Mischung der beiden Kautschuke an die Viskosität der Folienträgerschicht anpassen lässt, was die Durchführung der Prozesse vereinfacht. Die Anforderungen an Verarbeitbarkeit beim Beschichten, Extrudieren oder Verstrecken können die Auswahl an Haftklebepolymeren einschränken, was die Notwendigkeit einer Vernetzung nach sich zieht. Nach dem Verstreckungsvorgang kann der Kleber deshalb vorteilhaft durch energiereiche Strahlung wie Elektronenstrahlung oder UV-Licht oder durch dem Kleber oder dem Primer zugesetzte chemische Vernetzungsmittel vernetzt werden, um die anwendungsgerechte Scherfestigkeit zu erreichen (im Falle des dem Primer zugesetzten Vernetzungsmittel diffundiert dieses später in den Haftkleber). Bei Rezepturen aus Basis von Naturkautschuk liegt der bevorzugte Anteil von Harzen und Weichmachern zusammen über 100 phr und bei Blockcopolymeren des Isoprens und/oder Butadiens unter 100 phr.

Acrylatmassen neigen bei Verwendung als Haftklebemasse bei Foliendehnung im Applikator leicht zum unerwünschten Öffnen der Klebeverbindung, wegen des im Vergleich zu Produkten mit Folie aus dem Zwei-Stufen-Verfahren wesentlich höheren Moduls in MD wird hier jedoch eine wesentliche Verbesserung der Qualität erreicht. Bei Klebemassen, die in dieser Hinsicht nicht kritisch sind, kann der erhöhte Modul zur Reduzierung der Trägerdicke genutzt werden. Polyacrylate werden für doppelseitige Klebebänder genutzt, welche dauerhaft stark klebend und Witterungsbeständig sein sollen. Sie werden in der Regel in einem Lösungsmittel gelöst appliziert. Acrylathaftklebedispersion werden wegen der geringeren Feuchtigkeitsbeständigkeit und technischen Problemen bei der Trocknung hoher Schichtdicken, wie sie bei doppelseitige Klebebändern üblich sind, seltener verwendet. Das erfindungsgemäße Verfahren ist bevorzugt lösungsmittelfrei, daher sind schmelzbare Acrylathaftkleber für die vorliegende Erfindung besonders geeignet. Solche Rohstoffe sind seit kurzer Zeit auch kommerziell erhältlich. Besonders bevorzugt werden niedrigviskose Polyacrylate, welche nach der Beschichtung noch durch Strahlung vernetzt werden müssen, sowie Acrylatblockcopolymere, welche durch physikalische Selbstvernetzung nach dem Abkühlen der Schmelze hinreichend scherfest sind.

Zur Optimierung der Eigenschaften kann die zum Einsatz kommende Selbstklebemasse (Kleber) mit einem oder mehreren Additiven wie Klebrigmachem (Harzen), Weichmachern, Füllstoffen, Pigmenten, UV-Absorbem, Lichtschutz-, Altärungsschutzmitteln, Photoinitiatoren, Vernetzungsmitteln oder Vemetzungspromotoren abgemischt sein. Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol, wie Kolophonium und seine Folgeprodukte wie disproportionierte, dimerisierte oder veresterte Harze, wobei Glycole, Glycerin oder Pentaerythrit eingesetzt werden können, sowie weitere Harze (wie beispielsweise aufgeführt in Ullmanns Enzyklopädie der technischen Chemie, Band 12, S. 525 bis 555 (4. Auflage), Weinheim).

Geeignete Füllstoffe und Pigmente sind beispielsweise Ruß, Titandioxid, Calciumcarbonat, Zinkcarbonat, Zinkoxid, Silicate oder Kieselsäure. Geeignete beimischbare Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone. Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Die Haftkleberschicht kann dabei aus einer einzigen Haftklebemasse oder auch aus mehreren Einzelschichten bestehen, wobei eine derartige Schichtabfolge auch aus unterschiedlichen Klebemasse zusammengesetzt sein kann.

Die Klebkraft auf Stahl nach DIN EN 1939-Methode soll mindestens 1,3 N/cm, vorzugsweise mindestens 1,6 N/cm, weiter vorzugsweise mindestens 3 N/cm, besonders vorzugsweise mindestens 5 N/cm betragen, um eine hohe Haftung zu erzielen. Die Stärke der jeweiligen Haftkleberschichten liegt bevorzugt im Bereich von 30 bis 150 g/m², besonders bevorzugt 45 bis 100 g/m².

Die doppelseitigen Klebebänder weisen eine gute Haftung auf Untergründen und zeigen eine geringe Dehnbarkeit der Folie.

Im folgenden soll die Erfindung durch eine Reihe von Beispielen näher erläutert werden.

### Prüfmethoden

Die in den Beispielen genannten Messergebnisse wurden bei Normklima nach DIN 50014 -23/50- Teil 1 ermittelt.

Die Klebkraft auf Stahl beziehungsweise Trägerrückseite erfolgte nach DIN EN 1939.

Der Masseauftrag wurde durch Differenzwägung nach Abwaschen der Klebemasse mit Hexan bestimmt, soweit nicht eine Dickenmessung durch Mirkotomschnitt ausdrücklich erwähnt ist.

Zur Charakterisierung des Kautschuks wurde die Mooney-Viskosität herangezogen, sie wurde nach ASTM D 1646 bestimmt. -

Die mechanische Daten wurden entsprechend DIN 53455-7-5 ermittelt, wobei die Messung frühestens nach einer Woche stattfand, damit die Folie sich im Endzustand (nach der Nachkristallisation) befand. Bei der Berechnung dieser Kennzahlen wird bei der Division der Kräfte durch die Dicke nicht die Dicke des gesamten Klebebandes zugrundegelegt, sondern die Dicke der Folienträgerschicht.

Die Schmelzindices wurde nach ISO 1133 bei 230 °C und 21,6 N gemessen.

### Beispiele

### Beispiel 1

Auf einer Kampf-Anlage (Flex-lip-Düse Breite 500 mm, Chillroll mit Wasserbad, Durchsatz ca. 1200 kg/h) wurde ein PP-Homopolymer mit einem Schmelzindex von 8 g/10 min (Daplen KF 201) unter Zusatz von 2000 ppm 3,4-Dimethydibenzylidene-sorbitol als Nucleierungsmittel extrudiert, auf der Chillroll (Durchmesser 2500 mm) abgekühlt, beidseitig mit einem Filzrakel mit einem chlorhaltigen Polymerprimer (Superchlon™) angewischt und ein Stück weiter nach Ablüftung des Primers aus zwei Schmelzdüsen mit einem Acrylatblockcopolymer (LA2140-P16 von Kuraray) beschichtet. Dieser Verbund durchlief die Simultanreckeinrichtung bei einer Ofentemperatur von 160 °C und wurde unter Einkaschierung eines Trennpapiers mit 70 m/min aufgewickelt. Das Reckverhältnis war längs 1 : 7 und quer 1 : 7,5. Die mit Klebstoff in Berührung kommenden Walzen wurden zuvor mit einem Klebeband mit Silikonkautschukoberfläche abgeklebt.

Das erhaltene Produkt weist folgende Daten auf:

| | |
|---|---|
| Klebkraft auf Stahl: | je 1,8 N/cm |
| Klebmasseauftrag: | je 50 g/m² |
| Foliendicke: | 30 µm |
| Spannung bei 10 % Dehnung in MD: | 60 N/mm² |
| Tensile Strength in MD: | 132 N/mm² |

### Beispiel 2

Auf einer 5-Schicht-Folienblas-Anlage (double bubble) mit einem Schlauchumfang von 1,3 m wurden fünf Schichten mit der Abfolge A B C B A coextrudiert:
- A =: EVA-Copolymer mit 45 % EVA (Levapren 450, der Schmelzindex wurde laut Hersteller bei dieser Charge zu 5 g/10 min bei 190 °C gemessen)
- B =: Mischung aus je ½ EVA-Copolymer (Ethylenvinylacetat) mit 28 % VA (Vinylacetat) (Escorene UL 728) und PP-Blockcopolymer mit ca. 6,5 % Ethylen (Novolen 2309 L)
- C =: isotaktisches PP-Homopolymer mit einem Schmelzindex von 3 g/10 min (Exxon PP 4352 F3) unter Zusatz von 2500 ppm MDBS Nucleierungsmittel

Der Schlauch wurde beidseitig geschlitzt, die beiden Bahnen jeweils mit silikonisierter Polyesterfolie (50 µm) kaschiert, aufgewickelt und zu Rollen geschnitten. Die klebstoffberührenden Teile der Anlage waren aus Teflon beziehungsweise aus Silikon. Der Folienschlauch wurde stark gekühlt und die Trennung erfolgte in-line, damit die Klebstoffschichten sich noch voneinander lösen ließen.

Das erhaltene Produkt weist frisch folgende Daten auf:

| | |
|---|---|
| Klebkraft auf Stahl: | je 3 N/cm (längs) |
| Klebmassendicke: | je 40 µm (A) |
| Primerdicke: | je 5 µm (B) |
| Foliendicke: | 30 µm (C) |
| Spannung bei 10 % Dehnung in MD: | 90 N/mm² |
| Tensile Strength in MD: | 205 N/mm² |

Die Dicken wurden nach Mikrotomschnitt mikroskopisch ermittelt.

### Beispiel 3

Auf einer LISIM-Anlage wurde eine Dickfolie aus PP-Homopolymer mit einem Schmelzindex von 2 g/ 10 min (Inspire H301-02AS) bei 215 °C auf eine Chillroll extrudiert, auf beiden Seiten coronabehandelt, darauf jeweils aus einer Schmelzdüse mit einem SIS-Schmelzhaftkleber (bestehend aus 100 phr SIS Vector 4111, 110 phr Harz Escorez 2203, 10 phr Weichmacher Flexon 876 und 2 phr Antioxidant Irganox 1010) beschichtet, dieser Verbund durchlief die Simultanreckeinrichtung bei einer Ofentemperatur von 155 °C (Reckverhältnis längs 1 : 9 und quer 1 : 5) und wurde unter Kaschierung mit einem beidseitig silikonisierten Kraftpapier mit 20 m/min aufgewickelt. Die mit Klebstoff in Berührung kommenden Walzen wurden zuvor mit einem Klebeband mit Silikonkautschukoberfläche abgeklebt.

Das erhaltene Produkt weist folgende Daten auf:

| | |
|---|---|
| Klebkraft auf Stahl: | je ca. 8,5 N/cm |
| Klebmasseauftrag: | je ca. 30 g/m² |
| Dicke der Folienträgerschicht: | 30 µm |
| Spannung bei 10 % Dehnung in MD: | 100 N/mm² |
| Tensile Strength in MD: | 240 N/mm² |

Die Dicken wurden durch Abwaschen des Haftklebers mit Hexan bestimmt.

### Beispiel 4

Das Muster wurde wie in Beispiel 3, jedoch mit folgenden Änderungen hergestellt:
- zusätzliche Coextrusionsschicht als Primer (PP Elastomer HiFax CA 212 A),
- keine Coronabehandlung.

Das erhaltene Produkt weist folgende Daten auf:

| | |
|---|---|
| Klebkraft auf Stahl: | je 9 N/cm |
| Klebmasseauftrag: | 36 beziehungsweise 38 g/m² |
| Dicke der Folienträgerschicht: | 30 µm |
| Dicke der Primerschicht: | 1 bis 2 µm |
| Spannung bei 10 % Dehnung in MD: | 110 N/mm² |
| Tensile Strength in MD: | 240 N/mm² |

### Beispiel 5

Ein PP-Copolymer mit ca. 2 % Ethylen und einem Schmelzindex von 5 g/10 min wurde in 1,5 mm Stärke extrudiert, jeweils einseitig flammvorbehandelt beziehungsweise coronabehandelt und auf jeder Seite mit einem Klebstofffilm von 1 mm Stärke kaschiert.

Der Klebstofffilm wurde durch Kalandrieren hergestellt und hatte folgende Zusammensetzung:

| | |
|---|---|
| 45 Gew.-% | Naturkautschuk mit einem Mooney-Wert von 46, |
| 1,4 Gew.-% | Antioxidant BKF, |
| 41,21 Gew.-% | Hercotac 205, |
| 0,39 Gew.-% | Isocyanat Suprasec DNR, |
| 12 Gew.-% | Wollfett. |

Beide Komponenten wurden im Frischzustand verwendet. Das Muster wurde quadratisch zugeschnitten und nach 60 sec. Vorwärmung bei 180 °C simultan verstreckt, das Streckverhältnis wurde in beide Richtungen auf 1 : 7 festgelegt. Die erhaltene Probe wurde zwischen Lagen einer Trennfolie, hergestellt aus 23 µm Polyesterfolie und beidseitig mit Polyvinylstearylcarbamat beschichtet, in 15 mm breite Streifen zerschnitten und diese zu einer kleinen Musterrolle von Hand aufgewickelt.

Nach 4 Wochen Lagerung bei Raumtemperatur wies folgende Daten auf:

| | |
|---|---|
| Klebkraft auf Stahl: | je ca. 3,7 N/cm |
| Klebmasseauftrag: | je 30 g/m² |
| Foliendicke: | 30 µm |
| Spannung bei 10 % Dehnung in MD: | 67 N/mm² |
| Tensile Strength in MD: | 165 N/mm² |

Bei einer Wiederholung dieses Versuchs mit einem hochmolekularen Kautschuk (RSS1, Mooney-Wert 93) löste sich beim Verstrecken die Klebschicht teilweise vom Untergrund ab und wies Risse auf.

### Beispiel 6

Eine Fünfschichtfolie (Platte) mit dem Aufbau wurde A B C B A coextrudiert:
- Acrylatschmelzkleber (acResin A 258 UV, BASF) (A)
- MSA modifiziertes PP (Bynel 50E739, DuPont) (B)
- PP-Homopolymer einem Schmelzindex von 6 g/10 min (C)

Das Muster wurde quadratisch zugeschnitten und nach 60 sec. Vorwärmung bei 158 °C simultan verstreckt, das Streckverhältnis wurde in beide Richtungen auf 1 : 6,9 festgelegt. Die erhaltene Probe wurde beidseitig mit dimensionsstabilem Trennpapier von 70 g/m² (beidseitig PE-beschichtet und silikonisiert) kaschiert, jede Seite bei 15 m/min. an einem UV-Strahler mit 120 W/cm vorbeigeführt, in 15 mm breite Streifen zerschnitten und diese zu einer kleinen Musterrolle von Hand aufgewickelt. Die Stärke der einzelnen Schichten wurde durch mikroskopische Untersuchung festgestellt: A = 50 µm, B = 1 µm, C = 30 µm. Die Klebkraft beträgt jeweils 6,1 N/cm. Die Masse ist hinreichend vernetzt, was sich aus einem Gelgehalt von 45 Gew.-% (bestimmt durch 3-tägige Extraktion in Toluol bei 23 °C in einem Tyvec-Beutel) ergibt.

### Beispiel 7

Polyethylenterephthalatgranulat wurde im Vakuumtrockenschrank von Feuchtigkeit befreit und auf eine 20 °C kalte Chillroll als Folie extrudiert. Nach Vorbehandlung mit einem wässrigen Primer auf PVDC-Basis (Haloflex) wurde beidseitig ein Acrylatschmelzhaftkleber mit einer Schmelzdüse aufgetragen. Der Acrylatschmelzhaftkleber besteht aus 60 Gew. % LA 2140-P16, 20 Gew.-% LA 2444-P5 (beides Acrylatblockcopolymere von Kuraray) und 20 Gew.-% Foral 85 (Klebharz von Eastman). Dieser Verbund wurde bei 130 °C simultan verstreckt, das Streckverhältnis wurde in beide Richtungen auf 1 : 3,6 festgelegt und anschließend bei 220 °C thermofixiert.

Das Muster weist nach dem Kaschieren mit Trennpapier folgende Daten auf:

| | |
|---|---|
| Klebkraft auf Stahl: | je ca. 5,5 N/cm |
| Klebmasseauftrag: | je ca. 80 g/m² |
| Foliendicke: | 24 µm |
| Spannung bei 10 % Dehnung in MD: | 115 N/mm² |
| Tensile Strength in MD: | 148 N/mm² |

### Vergleichsbeispiel 1

Eine Folie (35 MB 250 von Exxonmobil) aus dem 2-Stufenreckprozess wurden auf einer Produktionsanlage auf der vorbehandelten Seite mit einem Schmelzhaftkleber wie in Beispiel 3 beschrieben beschichtet, mit Trennpapier eingedeckt und aufgewickelt. Diese Rolle wurde in einem 2. Arbeitsgang auf der anderen Seite coronavorbehandelt, erneut mit dem Schmelzhaftkleber beschichtet und zur Rolle gewickelt. Beim Applizieren der 2. Klebstoffschicht wirft das Vormaterial direkt nach der Düse an den Beschichtungskanten Wellen, welche im Wickel Falten bilden.

Das Muster weist folgende Daten auf:

| | |
|---|---|
| Klebkraft auf Stahl: | je ca. 8,3 N/cm |
| Klebmasseauftrag: | je ca. 30 g/m² |
| Foliendicke: | 35 µm |
| Spannung bei 10 % Dehnung in MD: | 50 N/mm² |
| Tensile Strength in MD: | 145 N/mm² |

Ein 50 mm langes Muster wurde über zwei Stahlplatten geklebt (Verklebungsfläche je 25 mm Länge und 13 mm Breite). Die eine Stahlplatte wurde senkrecht aufgehängt und die andere mit steigender Zugkraft belastet. Zum Vergleich wurde ein Muster aus Beispiel 3 verklebt. Auch bei mehrfacher Wiederholung dieses Versuchs platzt das Klebeband aus Beispiel 3 erst viel später (bei deutlich höherer Belastung) von einer der Stahlplatten ab als das Muster aus Vergleichsbeispiel 1.

### Vergleichsbeispiel 2

Eine Folie (PP 28 µm von Pao Yan Tsae Yih) aus dem 2-Stufenreckprozess wurden auf einer Produktionsanlage auf der flammvorbehandelten Seite mit einem wässrigen Primer auf PVDC-Basis (Haloflex) beschichtet und getrocknet. Darauf wurde in einem weiteren Arbeitsgang ein Acrylathaftklebstoff mit einem K-Wert von 78 (Zusammensetzung 48 Gew.-% Butylacrylat, 48 Gew.-% Ethylhexylacrylat und 4 Gew.-% Acrylsäure, gelöst in Essigsäureethylester) mit einem Streichbalken aufgetragen, getrocknet und mit einer Trennfolie kaschiert. Dieser Verbund wurde auf der anderen Seite coronabehandelt, mit dem gleichen Primer und Haftkleber versehen und zu Rolle gewickelt.

Das Muster weist folgende Daten auf:

| | |
|---|---|
| Klebkraft auf Stahl: | je ca. 3,5 N/cm |
| Klebmasseauftrag: | je 25 g/m² |
| Foliendicke: | 28 µm |
| Spannung bei 10 % Dehnung in MD: | 45 N/mm² |
| Tensile Strength in MD: | 150 N/mm² |

### Vergleichsbeispiel 3

Das Beispiel 1 der US 5145718 wurde nachgestellt, abweichend wurde Polyvinylstearycarbamat eingesetzt.

Das Muster weist folgende Daten auf:

| | |
|---|---|
| Klebkraft auf Stahl: | < 1 N/cm |
| Klebmasseauftrag: | 2 g/m² |
| Foliendicke: | 30 µm |
| Spannung bei 10 % Dehnung in MD: | 50 N/mm² |
| Tensile Strength in MD: | 155 N |

Das erhaltene Produkt klebt nur einseitig.

## Patentansprüche

1. Verfahren zur Herstellung eines doppelseitig klebend ausgerüsteten Folienklebebandes, **dadurch gekennzeichnet, dass**
ein Verbund aus mindestens einer Trägerfolienschicht, auf der beidseitig eine Haftkleberschicht vorhanden ist, biaxial verstreckt wird.

2. Verfahren zur Herstellung eines doppelseitig klebend ausgerüsteten Folienklebebandes, **dadurch gekennzeichnet, dass**
ein Verbund aus mindestens einer Trägerfolienschicht, auf der einseitig eine Haftkleberschicht vorhanden ist, biaxial verstreckt wird, und
anschließend auf den verstreckten Verbund eine zweite Haftkleberschicht aufgebracht wird.

3. Verfahren nach Anspruch 1 oder 2, **dadurch gekennzeichnet, dass**
sich zwischen der Trägerfolienschicht und der oder den Haftkleberschichten eine Primerschicht befindet.

4. Verfahren nach zumindest einem der vorangehenden Ansprüche, **dadurch gekennzeichnet, dass**
die Folienträgerschicht des Klebebandes und/oder der Verbund nach dem Verstrecken thermofixiert wird.

5. Verfahren nach zumindest einem der vorangehenden Ansprüche, **dadurch gekennzeichnet, dass**
der Haftkleber durch eine Schmelzbeschichtung oder durch Coextrusion auf die Trägerfolienschicht aufgebracht wird.

6. Verfahren nach zumindest einem der vorangehenden Ansprüche, **dadurch gekennzeichnet, dass**
der Haftkleber vor dem Verstrecken durch Kaschieren auf die Trägerfolienschicht beziehungsweise auf die Primerschicht aufgebracht wird.

7. Verfahren nach zumindest einem der vorangehenden Ansprüche, **dadurch gekennzeichnet, dass**
das Verfahren lösungsmittelfrei ist, insbesondere alle Schichten des Verbundes aus der Schmelze hergestellt werden.

8. Verfahren nach zumindest einem der vorangehenden Ansprüche, **dadurch gekennzeichnet, dass**
der Haftkleber durch energiereiche Strahlung oder chemisch vernetzt wird, die simultane Verstreckung auf einer Anlage mit Linearmotor-Technologie durchgeführt wird und/oder
der Verbund nach der Verstreckung in einem In-line-Prozess einem Stangenwickler oder einer Schneidemaschine zugeführt wird.

9. Verfahren nach zumindest einem der vorangehenden Ansprüche, **dadurch gekennzeichnet, dass**
das Gesamtstreckverhältnis mindestens 1 : 40 beträgt und/oder
das Verhältnis der Streckverhältnisse in Längsrichtung zu dem in Querrichtung über 0,9 liegt.

10. Verfahren nach zumindest einem der vorangehenden Ansprüche, **dadurch gekennzeichnet, dass**
das Klebeband auf Pappkerne mit elastischer Schaumauflage gewickelt wird.

11. Verfahren nach zumindest einem der vorangehenden Ansprüche, **dadurch gekennzeichnet, dass**
die Folienträgerschicht zumindest ein Nucleierungsmittel enthält.

12. Verfahren nach zumindest einem der vorangehenden Ansprüche, **dadurch gekennzeichnet, dass**
die Folienträgerschicht überwiegend aus isotaktischem Polypropylen oder überwiegend aus Polyethylenterephthalat besteht und/oder die Folienträgerschicht Polypropylen mit einem Schmelzindex von 1 bis 10 g/10 min enthält.

13. Verfahren nach zumindest einem der vorangehenden Ansprüche, **dadurch gekennzeichnet, dass**
die Trägerschicht so gereckt ist, dass die Spannung bei 10 % Dehnung in Längsrichtung mindestens 50 N/mm², bevorzugt mindestens 70 N/mm², sehr bevorzugt mindestens 100 N/mm² und/oder
die Trägerschicht so gereckt ist, dass die Tensile Strength in Längsrichtung mindestens 160 N/mm², bevorzugt mindestens 190 N/mm², sehr bevorzugt mindestens 220 N/mm² beträgt.

14. Verfahren nach zumindest einem der vorangehenden Ansprüche, **dadurch gekennzeichnet, dass**
die Haftkleberschicht Naturkautschuk, mindestens ein Styrol-Isopren-Blockcopolymer und/oder mindestens ein Harz enthält.

15. Verfahren nach zumindest einem der vorangehenden Ansprüche, **dadurch gekennzeichnet, dass**
die Klebkraft auf Stahl mindestens 1,3 N/cm, bevorzugt mindestens 1,6 N/cm beträgt.

## Claims

1. Method of producing a double-sided film adhesive tape, **characterized in that** a composite comprising at least one backing film layer with a layer of pressure-sensitive adhesive on either side is biaxially drawn.

2. Method of producing a double-sided film adhesive tape, **characterized in that** a composite comprising at least one backing film layer with a layer of pressure-sensitive adhesive on one side is biaxially drawn and subsequently a second layer of pressure-sensitive adhesive is applied to the drawn composite.

3. Method according to Claim 1 or 2, **characterized in that** between the backing film layer and the layer or layers of pressure-sensitive adhesive there is a primer layer.

4. Method according to at least one of the preceding claims, **characterized in that** the film backing layer of the adhesive tape and/or the composite is heat-set after drawing.

5. Method according to at least one of the preceding claims, **characterized in that** the pressure-sensitive adhesive is applied by meltcoating or by coextrusion to the backing film layer.

6. Method according to at least one of the preceding claims, **characterized in that** the pressure-sensitive adhesive is applied prior to the drawing by lamination to the backing film layer and/or to the primer layer.

7. Method according to at least one of the preceding claims, **characterized in that** the method is solvent-free, and in particular all layers of the composite are produced from the melt.

8. Method according to at least one of the preceding claims, **characterized in that** the pressure-sensitive adhesive is crosslinked by means of high-energy radiation or chemically, the simultaneous drawing is carried out on a unit with linear motor technology and/or the composite, after the drawing, is supplied in an in-line operation to a log-roll winder or to a slitting machine.

9. Method according to at least one of the preceding claims, **characterized in that** the overall draw ratio is at least 1:40 and/or the ratio of the draw ratios in machine direction to that in cross direction is more than 0.9.

10. Method according to at least one of the preceding claims, **characterized in that** the adhesive tape is wound onto paperboard cores with an elastic foam lining.

11. Method according to at least one of the preceding claims, **characterized in that** the film backing layer comprises at least one nucleating agent.

12. Method according to at least one of the preceding claims, **characterized in that** the film backing layer is composed predominantly of isotactic polypropylene or predominantly of polyethylene terephthalate and/or the film backing layer comprises polypropylene having a melt index of 1 to 10 g/10 min.

13. Method according to at least one of the preceding claims, **characterized in that** the backing layer is stretched such that the stress at 10% elongation in machine direction is at least 50 N/mm², preferably at least 70 N/mm², very preferably at least 100 N/mm² and/or
the backing layer is stretched such that the tensile strength in machine direction is at least 160 N/mm², preferably at least 190 N/mm², very preferably at least 220 N/mm².

14. Method according to at least one of the preceding claims, **characterized in that** the layer of pressure-sensitive adhesive comprises natural rubber, at least one styrene-isoprene block copolymer and/or at least one resin.

15. Method according to at least one of the preceding claims, **characterized in that** the bond strength to steel is at least 1.3 N/cm, preferably at least 1.6 N/cm.

## Revendications

1. Procédé pour la réalisation d'une bande adhésive en feuille apprêtée de manière adhésive sur deux faces, **caractérisé en ce qu'**un assemblage constitué par au moins une couche en feuille support, sur laquelle se trouve, sur les deux faces, une couche d'auto-adhésif, est étiré biaxialement.

2. Procédé pour la réalisation d'une bande adhésive en feuille apprêtée de manière adhésive sur deux faces, **caractérisé en ce qu'**un assemblage constitué par au moins une couche en feuille support, sur laquelle se trouve, sur une face, une couche auto-adhésive, est étiré biaxialement et on applique ensuite sur l'assemblage étiré une deuxième couche auto-adhésive.

3. Procédé selon la revendication 1 ou 2, **caractérisé en ce qu'**une couche d'apprêt se trouve entre la couche en feuille support et la ou les couches auto-adhésives.

4. Procédé selon au moins l'une quelconque des revendications précédentes, **caractérisé en ce que** la couche support en feuille de la bande adhésive et/ou de l'assemblage est thermofixée après l'étirement.

5. Procédé selon au moins l'une quelconque des revendications précédentes, **caractérisé en ce que** l'auto-adhésif est appliqué par un revêtement de masse fondue ou par coextrusion sur la couche en feuille support.

6. Procédé selon au moins l'une quelconque des revendications précédentes, **caractérisé en ce que** l'auto-adhésif est appliqué avant l'étirement par contrecollage sur la couche en feuille support ou sur la couche d'apprêt.

7. Procédé selon au moins l'une quelconque des revendications précédentes, **caractérisé en ce que** le procédé est exempt de solvant, en particulier que toutes les couches de l'assemblage sont réalisées à partir d'une masse fondue.

8. Procédé selon au moins l'une quelconque des revendications précédentes, **caractérisé en ce** l'auto-adhésif est réticulé par un rayonnement riche en énergie ou chimiquement, l'étirement simultané est réalisé sur une installation avec une technologie à moteur linéaire et/ou l'assemblage est introduit après l'étirement dans un procédé en ligne dans une bobineuse à support ou une machine à découper.

9. Procédé selon au moins l'une quelconque des revendications précédentes, **caractérisé en ce que** le rapport d'étirage total est d'au moins 1 : 40 et/ou le rapport des rapports d'étirement dans le sens longitudinal à celui dans le sens transversal est supérieur à 0,9.

10. Procédé selon au moins l'une quelconque des revendications précédentes, **caractérisé en ce** la bande adhésive est enroulée sur des noyaux en carton avec un recouvrement en mousse élastique.

11. Procédé selon au moins l'une quelconque des revendications précédentes, **caractérisé en ce que** la couche support en feuille contient au moins un agent de nucléation.

12. Procédé selon au moins l'une quelconque des revendications précédentes, **caractérisé en ce que** la couche support en feuille est constituée principalement par du polypropylène isotactique ou principalement par du poly(téréphtalate d'éthylène) et/ou la couche support en feuille contient du polypropylène présentant un indice de fusion de 1 à 10 g/10 min.

13. Procédé selon au moins l'une quelconque des revendications précédentes, **caractérisé en ce que** la couche support est étirée de telle manière que la contrainte à un allongement de 10% dans le sens longitudinal est d'au moins 50 N/mm², de préférence d'au moins 70 N/mm², de manière tout particulièrement préférée d'au moins 100 N/mm² et/ou la couche support est étirée de manière telle que la résistance à la traction dans le sens longitudinal est d'au moins 160 N/mm², de préférence d'au moins 190 N/mm², de manière tout particulièrement préférée d'au moins 220 N/mm².

14. Procédé selon au moins l'une quelconque des revendications précédentes, **caractérisé en ce que** la couche auto-adhésive contient du caoutchouc naturel, au moins un copolymère à blocs de styrène/isoprène et/ou au moins une résine.

15. Procédé selon au moins l'une quelconque des revendications précédentes, **caractérisé en ce que** l'adhésivité sur l'acier est d'au moins 1,3 N/cm, de préférence d'au moins 1,6 N/cm.
